# EUROPEAN PATENT SPECIFICATION

(11) **EP 1 172 597 B1**
(45) Date of publication and mention of the grant of the patent: **16.03.2005**
(21) Application number: 00114874.1
(22) Date of filing: 11.07.2000
(51) Int. Cl.: F16L 37/20

(54) **Locking structure of a quick acting coupling**
Verschlusseinheit für eine Schnellverschlusskupplung
Structure de verrouillage pour un raccord à action rapide

(43) Date of publication of application: 16.01.2002
(73) Proprietor: FUSHING BROTHERS & CO., Taipei City, Taiwan (CN)
(72) Inventor: Chen, Ray, Taipei City, Taiwan (CN)
(74) Representative: Viering, Jentschura & Partner

(56) References cited:
- DE-C- 851 706
- DE-C- 872 902

## Description

### FIELD OF THE INVENTION

The present invention relates to an enhancing buckling structure of a quick connector having two opposing connecting parts.

### BACKGROUND OF THE INVENTION

In the prior art quick connector, two opposite connectors are engaged. Then a simple buckle is used to fix the structure. Although, this structure can be assembled with less time, but the articles to be transferred is easy to drain out. The prior art structure has defects of the buckle of the connector being easily to release due to mistakes in operation, the buckling being worn due to being used for longer time so that the buckle is unstable and then the connector releases, loose engagement in the annular buckle so that the connector will release.

Therefore, there are many defects in the prior art which are necessary to be improved.

DE 872902 C discloses a symmetrical pipe coupling having elastic sealing means, a biased lip, armor sleeves, pipe ends with a sealing bearing, a guiding tab for centering, toggle catches which engage hooks with sufficient play, and hinges supporting the toggle catches.

DE 851706 C discloses a pipe quick coupling, wherein each pipe and is provided with a ball bowl, in which an insertion ring is guided. The insertion ring is, by means of a ring disk, connected to a sleeve which is rotatably provided on the sleeve. Each insertion ring holds on the front face a sealing ring. The sealing rings abut each other upon connection of the two pipe ends. For the connection, each sleeve has a claw and a pivotable handle lever supporting a tensioning lever which has a hook for engaging the claw.

### SUMMARY OF THE INVENTION

Accordingly, the primary object of the present invention is to provide a enhancing buckling structure of a quick connector, which provides a double locking function so that the operation is convenient and easily, and which can safely prevent that its connection is accidentally released.

This is achieved by an enhancing buckling structure of a quick connector having two opposing connecting parts, comprising the features of claim 1. Further embodiments are described in the dependent claims.

The various objects and advantages of the present invention will be more readily understood from the following detailed description when reading in conjunction with the appended drawing.

### BRIEF DESCRIPTION OF THE DRAWINGS

Fig. 1 is a perspective view of a prior art quick connector.
Fig. 2 is a perspective view showing the retaining handle of the enhancing buckling structure of a quick connector according to the present invention.
Fig. 3 is an exploded perspective view of the enhancing buckling structure of a quick connector in the present invention.
Fig. 4 is a combination view of the enhancing buckling structure of a quick connector in the present invention.
Fig. 5 shows the use of the enhancing buckling structure of a quick connector in the present invention.

### DETAILED DESCRIPTION OF THE PREFERRED EMBODIMENTS

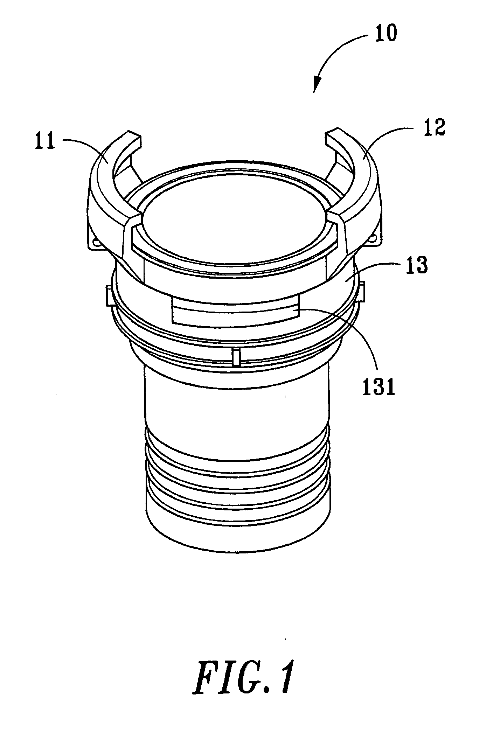

Fig. 1 shows a prior art quick connector comprising a body 10 the front end of which is extended with two opposite retaining hooks 11 and 12. In combining, a trench and an annular ring 13 are formed, which are engaged with the body 10 and are rotatable. Two symmetric sides are protruded with pins 131 (with respect to a position pin 132). As the quick connector is connected, the two retaining hooks 11 and 12 are buckled vertically. Then, by the annular element 13 to combine and rotate, the pins 131 and 132 can be inserted into the trenches. In the combining structure of the connector, there are many defects. For example, in the retaining portion, only one pin is used in fixing, thus the tightness is low. The operation, lifetime and wearing of the retaining structure are easily to be damaged.

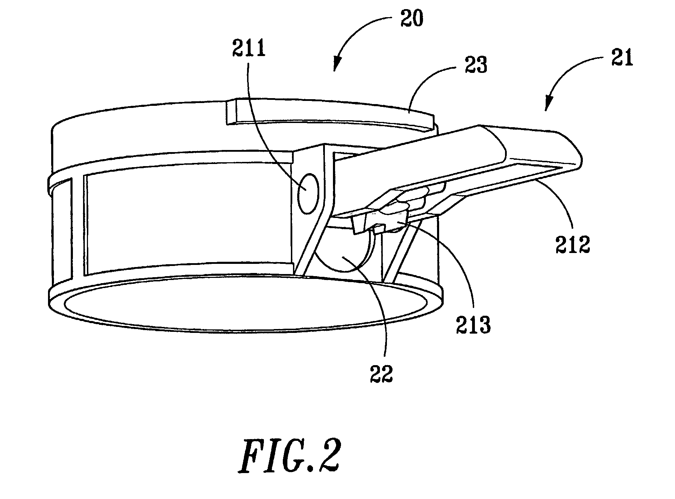

Referring to Fig. 2, in the slide buckle 20 of the present invention, a retaining handle 21 is further added. If the connector is not used, despite the retaining handle 21 is parallel or vertical to the body, it has no effect. By the upward and downward movement of the front axial portion 211 and the handle 212, the operation is easy. The tenon 213 has a saw teeth shape, as it is inserted into the groove of the body in the hollowed portion 22, it is easy to align with the groove. The front end thereof is fitted with a strip 23 which can be rotated into a hidden groove in the retaining hook as the connector is connected.

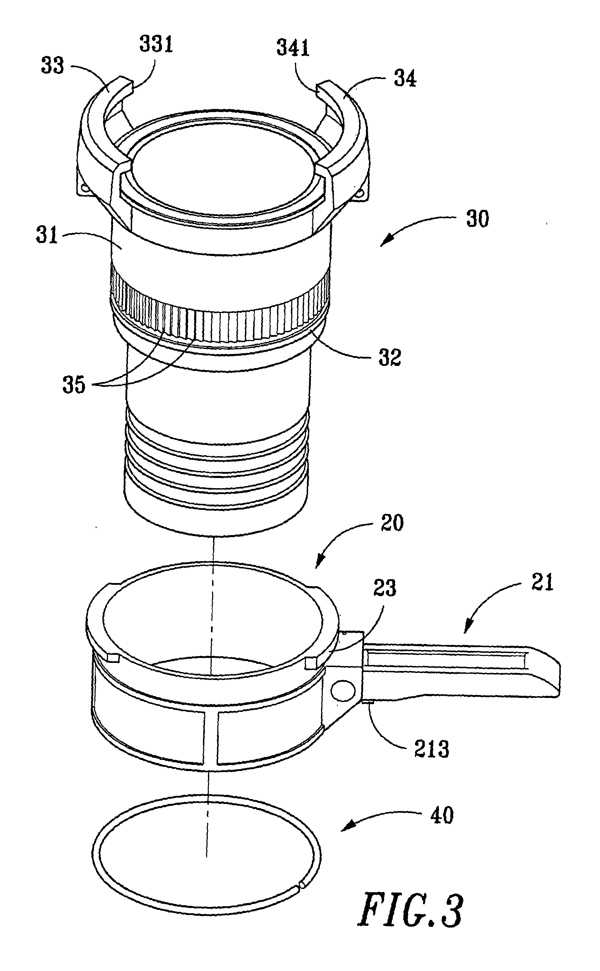

Referring to Fig. 3, the connector body 30 provides a smooth sliding track 31 so that an annular sliding buckle 20 can be received therein, and is locked by a C ring 40 from the backward concave track 32 so that the slide buckle 20 is rotatable in the connector body 30. The front extension is fitted with two reverse hooks 33 and 34. The width of the protruding inner edge wall 331 is different from the inner edge wall 341. Therefore, the retaining hooks 33, 34 with buckles are formed with a hidden groove. A rear end thereof is formed with a plurality of openings 35. As the retaining handle 21 is pressed downwards, the tenon 213 is inserted into one of the groove 35.

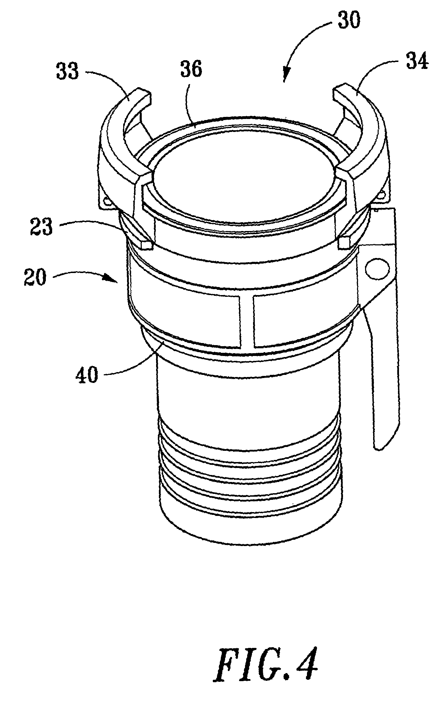

Referring to Fig. 4, by the locking of the C ring 40, the slide buckle 20 is rotable on the connector body 30. An elastic pad 36 is formed in the opening for increasing the tightness as buckling.

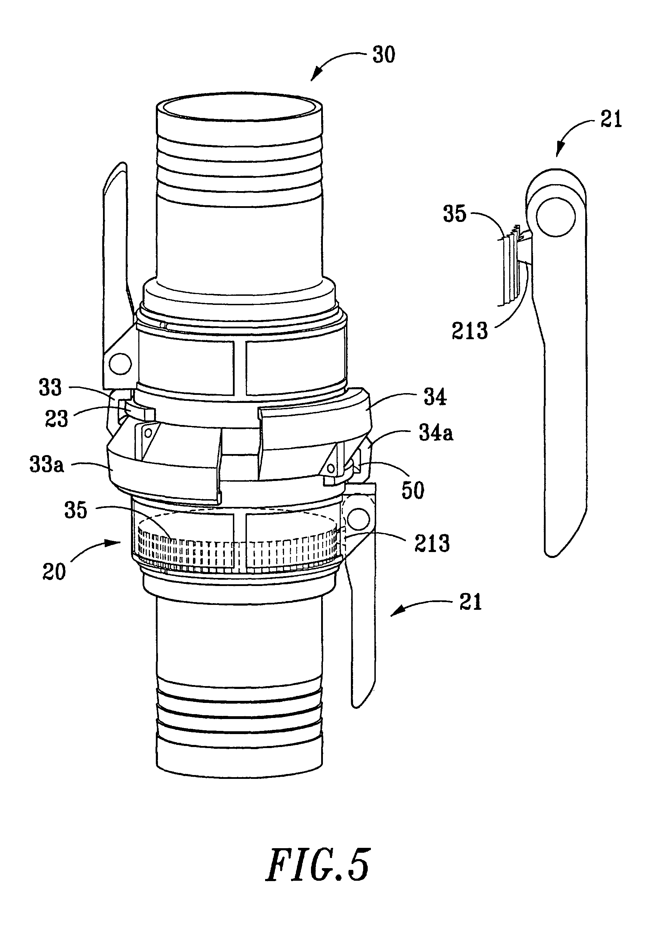

With reference to Fig. 5, as the connector is connected, the protruding retaining hooks 33 and 34 are inserted into matched portions of the respective retaining hooks 34 and 33. The other portion is identical. As the slide buckle 20 is rotated, the strip 23 is gradually slid into the groove 50 until it resists against the buckle, and then the retaining handle 21 is pressed downwards as that the tenon 213 is inserted downwards to the opening 35 at the body 30. Therefore, the connection is complete.

The enhancing buckling structure of a quick connector of the present invention has the following advantages.
1. The retaining handle is convenient for the hand operation with less force and the retaining handle can be moved easily.
2. The enhancing buckling structure is stable, and thus it is needless to worry about that the releasing of the buckling portion of the joint.
3. The annular slide buckle can be detached for updating as it is worn out.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. An enhancing buckling structure of a quick connector having two opposing connecting parts, said structure at least comprising:
a slide buckle (20) having an annular shape and being inserted over one of the connecting parts' body (30) for rotatably sliding, and a strip (23) which is provided at the front end of the slide buckle (20) and which can be rotatably guided into a hidden groove (50) of a retaining hook (30a, 34a) of the other part of the connector, an upper portion of said slide buckle (20) being extended with a retaining handle (21) having a tenon (213) at a lower side thereof;
a connector body (30) having a concave track (32) for receiving the slide buckle (20), the front end of the connector body (30) being extended with two retaining hooks (33, 34), each of the retaining hooks (33, 34) having a hidden groove at an inner side thereof, and the rear end of the connector body (30) having a plurality of grooves (35) so that as the retaining handle (21) is pressed downwards, the tenon (213) in the retaining handle (21) is inserted into one groove (35) at a lower side; and
a C ring providing a support for locking the slide buckle (20) on the connector body (30), leaving it free to rotate around the said connector body (30), wherein by engagement of respective connector bodies (30), the slide buckle (20) is inserted into the groove (50) in the connector part to be connected and the retaining handle is pressed so that the tenon (213) of the retaining handle (21) is inserted into one groove (35) preventing rotation of the slide buckle (20) around the connector's body.

2. The enhancing buckling structure of a quick connector as claimed in claim 1, wherein opening of the body is fitted with an elastic pad (36) for tightly sealing and preventing the draining of objects to be transferred.

## Patentansprüche

1. Stabilitätserhöhende Struktur eines Schnellverbinders mit zwei einander gegenüberliegenden Verbindungsteilen, wobei die Struktur wenigstens aufweist:
eine Gleitspange (20), die eine Ringform hat und über einen Körper (30) eines der Verbindungsteile zum drehbaren Gleiten gesetzt ist, und die einen Streifen (23) aufweist, welcher an dem vorderen Ende der Gleitspange (20) vorgesehen ist und welcher in einer verborgenen Nut (50) eines Haltehakens (30a, 34a) des anderen Teils des Verbinders drehbar geführt werden kann, wobei ein oberer Abschnitt der Gleitspange (20) mit einem Haltgriff (21) versehen ist, der einen Zapfen (213) an einer unteren Seite davon aufweist;
einen Verbinderkörper (30), der eine konkave Gleitbahn (32) zum Aufnehmen der Gleitspange (20) aufweist, wobei das vordere Ende des Verbinderkörpers (30) mit zwei Haltehaken (33, 34) versehen ist, wobei jeder der Haltehaken (33, 34) eine verborgene Nut an einer Innenseite davon aufweist, und wobei das hintere Ende des Verbinderkörpers (30) eine Mehrzahl von Nuten (35) aufweist, so dass, wenn der Haltegriff (21) nach unten gedrückt wird, der Zapfen (213) in dem Haltegriff (21) in eine Nut (35) an einer unteren Seite eingesetzt wird; und
einen C-Ring, der eine Stütze zum Verriegeln der Gleitspange (20) an dem Verbinderkörper (30) schafft und frei drehbar um den Verbinderkörper (30) herum gelassen wird, wobei durch Eingriff der jeweiligen Verbinderkörper (30) die Gleitspange (20) in die Nut (50) in dem zu verbindenden Verbinderteil eingesetzt wird und der Haltegriff gedrückt wird, so dass der Zapfen (213) des Haltegriffes (21) in die eine Nut (35) unter Verhinderung einer Drehung der Gleitspange (20) um den Körper des Verbinders herum eingesetzt wird.

2. Stabilitätserhöhende Struktur eines Schellverbinders nach Anspruch 1, wobei die Öffnung des Körpers mit einem elastischen Polster (36) zum engen Abdichten und Verhindern des Austretens zu übertragender Gegenstände versehen ist.

## Revendications

1. Structure de verrouillage amélioré d'un raccord rapide présentant deux parties de connexion opposées, ladite structure comprenant au moins:
une boucle coulissante (20) ayant une forme annulaire et étant insérée sur le corps (30) d'une des parties de connexion pour coulisser d'une façon rotative, et une bande (23) prévue à l'extrémité avant de la boucle coulissante (20) et pouvant être guidée d'une façon rotative dans une rainure masquée (50) d'un crochet de retenue (30a, 34a) de l'autre partie du raccord, une partie supérieure de ladite boucle coulissante (20) étant étendue avec une poignée de retenue (21) comportant un tenon (213) sur un côté inférieur de celle-ci;
un corps de raccord (30) ayant une gorge concave (32) pour recevoir la boucle coulissante (20), l'extrémité avant du corps de raccord (30) étant étendue avec deux crochets de retenue (33, 34), chacun des crochets de retenue (33, 34) ayant une rainure masquée sur un côté intérieur de celui-ci, et l'extrémité arrière du corps de raccord (30) ayant une pluralité de rainures (35), de telle sorte que lorsque la poignée de retenue (21) est pressée vers le bas, le tenon (213) dans la poignée de retenue (21) soit inséré dans une rainure (35) sur un côté inférieur; et
un anneau en C fournissant un support pour verrouiller la boucle coulissante (20) sur le corps de raccord (30), laissant celle-ci libre de tourner autour dudit corps de raccord (30), dans laquelle, par l'engagement des corps de raccord respectifs (30), la boucle coulissante (20) est insérée dans la rainure (50) dans la partie de raccord à connecter, et la poignée de retenue est pressée de telle sorte que le tenon (213) de la poignée de retenue (21) soit inséré dans une rainure (35), empêchant la rotation de la boucle coulissante (20) autour du corps de raccord.

2. Structure de verrouillage améliorée d'un raccord rapide selon la revendication 1, dans laquelle l'ouverture du corps est pourvue d'une garniture élastique (36) pour créer une étanchéité et empêcher le drainage d'objets à transférer.
